(19) Europäisches Patentamt
European Patent Office
Office européen des brevets

(11) **EP 4 374 049 B1**

(12) **EUROPÄISCHE PATENTSCHRIFT**

(45) Veröffentlichungstag und Bekanntmachung des Hinweises auf die Patenterteilung:
**12.02.2025 Patentblatt 2025/07**

(21) Anmeldenummer: **22751720.8**

(22) Anmeldetag: **20.07.2022**

(51) Internationale Patentklassifikation (IPC):
**F01N 3/021** (2006.01)     **F01N 3/08** (2006.01)
**F01N 3/10** (2006.01)      **F01N 13/00** (2010.01)

(52) Gemeinsame Patentklassifikation (CPC):
**F01N 3/021; F01N 3/0814; F01N 3/0835;**
**F01N 3/101; F01N 13/0093;** F01N 2330/06;
F01N 2340/02; F01N 2370/04; F01N 2370/24;
F01N 2510/063; F01N 2570/12

(86) Internationale Anmeldenummer:
**PCT/EP2022/070289**

(87) Internationale Veröffentlichungsnummer:
**WO 2023/001865 (26.01.2023 Gazette 2023/04)**

(54) **ABGASREINIGUNGSSYSTEM ZUR REINIGUNG VON ABGASEN VON BENZINMOTOREN**

EXHAUST GAS PURIFICATION SYSTEM FOR PURIFYING EXHAUST GAS OF GASOLINE ENGINES

SYSTÈME DE PURIFICATION DES GAZ D'ÉCHAPPEMENT POUR LA PURIFICATION DES GAZ D'ÉCHAPPEMENT DES MOTEURS D'ESSENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2021 DE 102021118803**

(43) Veröffentlichungstag der Anmeldung:
**29.05.2024 Patentblatt 2024/22**

(73) Patentinhaber: **Umicore AG & Co. KG**
**63457 Hanau-Wolfgang (DE)**

(72) Erfinder:
• SCHOENHABER, Jan
  64287 Darmstadt (DE)
• RICHTER, Joerg-Michael
  60389 Frankfurt (DE)
• BRAUN, Carolin
  63225 Langen (DE)
• PALM, Tim
  63549 Ronneburg (DE)

(56) Entgegenhaltungen:
EP-B1- 3 642 460        DE-A1- 102013 211 387
DE-A1- 102019 219 115   US-A1- 2018 230 882
US-B2- 10 323 593       US-B2- 6 729 129

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung richtet sich auf die Reinigung von Abgasen eines überwiegend mit stöchiometrischem Kraftstoffgemisch betriebenen Verbrennungsmotors. Das Abgassystem weist insbesondere 4 Reinigungsfunktionen in einer bestimmten Reihenfolge auf. Ein motornaher TWC1 (Drei-Wege-Katalysator) wird gefolgt von einem GPF (Benzinpartikelfilter) und einem dahinter angeordneten weiteren TWC2. Das System weist zusätzlich eine Kohlenwasserstoffe speichernde Funktionalität auf.

Abgase von mit überwiegend (>50% der Betriebszeit) stöchiometrischem Luft/KraftstoffGemisch betriebenen Verbrennungsmotoren, also z. B. mit Benzin oder Erdgas betriebene Ottomotoren, werden in herkömmlichen Verfahren mit Hilfe von Drei-Wege-Katalysatoren (three-way-catalyst; TWC) gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen. Stöchiometrisch heißt, dass im Mittel genau so viel Luft zur Verbrennung des im Zylinder vorhandenen Kraftstoffs zur Verfügung steht, wie für eine vollständige Verbrennung benötigt wird. Das Verbrennungsluftverhältnis $\lambda$ (A/F-Verhältnis; Luft/Kraftstoffverhältnis) setzt die tatsächlich für eine Verbrennung zur Verfügung stehende Luftmasse $m_{L,tats}$ ins Verhältnis zur stöchiometrischen Luftmasse $m_{L,st}$:

$$\lambda = \frac{m_{L,tats}}{m_{L,st}}$$

Ist $\lambda$ < 1 (z. B. 0,9) bedeutet dies "Luftmangel", man spricht von einem fetten Abgasgemisch, $\lambda$ > 1 (z. B. 1,1) bedeutet "Luftüberschuss" und das Abgasgemisch wird als mager bezeichnet. Die Aussage $\lambda$ = 1,1 bedeutet, dass 10% mehr Luft vorhanden ist, als zur stöchiometrischen Reaktion notwendig wäre.

Als katalytisch aktive Materialien werden in den Drei-Wege-Katalysatoren in der Regel Platingruppenmetalle, insbesondere Platin, Palladium und Rhodium eingesetzt, die beispielsweise auf $\gamma$-Aluminiumoxid als Trägermaterial vorliegen. Daneben enthalten Dreiwege-Katalysatoren Sauerstoffspeichermaterialien, beispielsweise Cer/Zirkonium-Mischoxide. In letzteren stellt Ceroxid, ein Seltenerdmetalloxid, die für die Sauerstoffspeicherung grundlegende Komponente dar. Neben Zirkoniumoxid und Ceroxid können diese Materialien zusätzliche Bestandteile wie weitere Seltenerdmetalloxide oder Erdalkalimetalloxide enthalten. Sauerstoffspeichermaterialien werden durch Aufbringen von katalytisch aktiven Materialien wie Platingruppenmetallen aktiviert und dienen somit auch als Trägermaterial für die Platingruppenmetalle.

Derartige katalytisch aktive Materialien samt Inhaltsstoffen werden durch einen Beschichtungsprozess auf z.B. Durchflusssubstrate aufgebracht. Nach dem Trocknen und Kalzinieren der Substrate können diese in das Abgassystem eingebaut werden. Durchflusssubstrate sind aus keramischen Materialien, wie z.B. Siliciumcarbid, Aluminiumtitanat und Cordierit aufgebaut und seit längerem bewährt. Sie sind aus einer Vielzahl von parallelen Kanälen aufgebaut, die durch poröse Wände gebildet werden. Die Kanäle sind an beiden Enden des Durchflusssubstrats offen. Das Abgas fließt so vom Einlassbereich zum Auslassbereich und kontaktiert dabei das auf den Wänden aufgebrachte katalytisch aktive Material.

Neben den gasförmigen Schadstoffen enthält das Abgas von derartigen Verbrennungsmotoren aber auch feinste Partikel (PM), die aus der unvollständigen Verbrennung des Kraftstoffs resultieren und im Wesentlichen aus Ruß bestehen. Im Unterschied zur Partikelemission von Dieselmotoren sind die Partikel im Abgas stöchiometrisch betriebener Verbrennungsmotoren, wie Ottomotoren, sehr klein und weisen eine durchschnittliche Partikelgröße kleiner 1 $\mu$m auf. Typische Partikelgrößen liegen im Bereich von 10 nm bis 200 nm. Des Weiteren ist die emittierte Partikelmenge sehr gering und bewegt sich im Bereich von 2 mg/km bis 4 mg/km.

Im Bereich der Reinigung von Abgas von mager betriebenen Motoren, also insbesondere von Dieselmotoren, haben sich Partikelfilter aus keramischen Materialien, wie z.B. Siliciumcarbid, Aluminiumtitanat und Cordierit seit längerem bewährt. Diese sind aus einer Vielzahl von parallelen Kanälen aufgebaut, die durch poröse Wände gebildet werden. Die Kanäle sind wechselseitig an einem der beiden Enden des Filters verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten und das Abgas gereinigt. Bei derartigen Aggregaten spricht man von Wandflussfiltern.

Die so zurückgehaltenen Partikel müssen nachfolgend abgebrannt bzw. oxidiert werden, um ein Verstopfen des Filters bzw. einen inakzeptablen Anstieg des Gegendrucks des Abgassystems zu verhindern. Zu diesem Zweck kann beispielsweise das Wandflussfilter mit katalytisch aktiven Beschichtungen versehen werden, die die Zündtemperatur von Ruß herabsetzen. Es ist bereits bekannt, solche Beschichtungen auf die porösen Wände zwischen den Kanälen aufzubringen (sogenannte auf-Wand-Beschichtung) oder in die porösen Wände einzubringen (sogenannte in-Wand-Beschichtung). Die EP1657410A2 beschreibt auch bereits eine Kombination beider Beschichtungsarten, d. h. ein Teil des katalytisch aktiven Materials liegt in den porösen Wänden und ein anderer Teil auf den porösen Wänden vor.

Das Konzept, Partikel mittels Wandflussfiltern aus dem Abgas zu entfernen, ist bereits auf die Reinigung von Abgas von mit stöchiometrischem Luft/Kraftstoff-Gemisch betriebenen Verbrennungsmotoren übertragen worden, siehe zum Beispiel die EP2042226A2 (gasoline particle filter; GPF). Gemäß deren Lehre trägt ein Wandflussfilter zwei übereinander angeordnete Schichten, wobei eine in der porösen Wand und die andere auf der porösen Wand angeordnet sein kann.

Die europäische Abgasgesetzgebung sieht seit Inkrafttreten der Stufe Euro 6c ab September 2017 Abgasmessungen unter realen Bedingungen auf der Straße vor (Real Driving Emissions; RDE). Je nach Fahrbedingungen können dadurch deutlich höhere Anforderungen an den Katalysator entstehen, insbesondere im Hinblick auf die dynamische Umsetzung von Kohlenmonoxid und Stickoxiden. In den momentan gültigen Abgasnormen müssen für die Schadstoffe wie HC, CO, NOx und Partikel die Grenzwerte der Euro 6d-Norm unter RDE-Bedingungen auch für alle Neufahrzeuge eingehalten werden. Hinzu kommt, dass ein gewisser $CO_2$-Flottengrenzwert nicht überschritten werden sollte. Insbesondere auch im Hinblick auf die Sekundäremissionen wie $N_2O$ und $NH_3$ werden zukünftige Abgasnormen in Europa und der Welt sicherlich noch anspruchsvollere Anforderungen an die Verbrennungsmotoren und deren Abgasaufbereitung stellen.

Es ist davon auszugehen, dass für derartige Normen einfache Katalysatoren und/oder Filter nicht mehr ausreichend sein werden. Daher werden auch im Bereich der überwiegend stöchiometrisch betriebenen Verbrennungsmotoren komplexere Abgassysteme Einzug halten müssen. Exemplarisch sei auf die EP3639919A1 verwiesen, in der ein Abgassystem bestehend aus einem ersten TWC gefolgt von einem GPF und einem weiteren TWC abstromseitig vom GPF vorgeschlagen wurde. Mittels dieser Systeme muss es dann gewährleistet werden, eine ausreichende katalytische Aktivität und Filtrationseffizienz mit einem möglichst geringen Abgasgegendruck zu kombinieren. Insbesondere der Abgasgegendruck eines entsprechenden Systems führt zu einem erhöhten Verbrauch an Kraftstoff, was sich negativ auf die $CO_2$-Bilanz auswirkt. Darüber hinaus kommen in zukünftigen Abgasnormen auch mehr und mehr sekundäre Emissionen wie das giftige $NH_3$ oder klimaschädliches $N_2O$ in den Blick. Alle diese Aspekte sollte ein entsprechendes zukünftiges Abgassystem adressieren können. Weitere Abgasreinigungssysteme werden in den folgenden Publikationen beschrieben:

EP 3 642 460 B1, DE 10 2019 219115 A1, US 2018/230882 A1, DE 10 2013 211387 A1, US 10 323 593 B2 oder US 6 729 129 B2.

Es besteht daher weiterhin ein Bedarf an Abgasreinigungssystemen für überwiegend mit stöchiometrischen Kraftstoffgemischen betriebenen Verbrennungsmotoren, die im Stande sind, alle erforderlichen schädlichen Bestandteile des Abgases dieser Motoren in höchst möglicher Weise zu beseitigen und dabei einen möglichst geringen Mehrverbrauch an Kraftstoff bedingen.

Diese und weitere sich aus dem Stand der Technik für den Fachmann ergebenden Aufgaben werden von einem Abgassystem gemäß vorliegender Erfindung gelöst. Dadurch, dass man in einem Abgasreinigungssystem zur Reinigung von Abgasen eines überwiegend stöchiometrisch betriebenen Verbrennungsmotors aufweisend einen motornahen TWC1 auf einem Durchflusssubstrat, einen abstromseitig zum TWC1 angebrachten GPF als Wandflussfilter und abstromseitig zum GPF einen weiteren TWC2 auf einem Durchflusssubstrat, das System dahingehend modifiziert, dass es zusätzlich Materialien zum temporären Speichern von Kohlenwasserstoffen aufweist, gelangt man äußerst überraschend und vorteilhaft zur Lösung der gestellten Aufgaben.

Unter dem Begriff "temporär" wird erfindungsgemäß verstanden, dass das Material in bestimmten Betriebszuständen des Abgassystems Kohlenwasserstoffe einspeichern kann und unter anderen diesen wieder abgibt bzw. keinen mehr aufnimmt. Das Speichermaterial selbst wird hierdurch nicht verändert. So kann das Material z.B. bei niedrigen Temperaturen die im Abgas befindlichen Kohlenwasserstoffe einspeichern und bei erhöhten Temperaturen wieder abgeben bzw. umsetzen (siehe hierzu weiter unten). Damit steht das Speichermaterial dann für eine weitere Einspeicherung von Kohlenwasserstoffen wieder zur Verfügung.

Die Etablierung eines Materials zum Speichern von Kohlenwasserstoffen in dem oben dargestellten System stellt eine optimale Kombination von vier funktionalen Abgasreinigungskomponenten dar, die zukünftige Abgasgrenzwerte einzuhalten erlaubt und darüber hinaus die Möglichkeit eröffnet, ein hohes Maß an Schadstoffreduktion im System zu realisieren. Durch die zusätzliche Speicherfunktion können im Abgas nicht umgesetzte Kohlenwasserstoffe insbesondere bei niedrigen Temperaturen abgefangen und eingespeichert werden. Sie gelangen so nicht in die Umwelt. Sofern es die Betriebszustände des Abgasreinigungssystems zulassen, werden die Kohlenwasserstoffe insbesondere bei höheren Abgastemperaturen wieder desorbiert und z.B. über einem TWC zu Wasser und Kohlendioxid oxidiert.

Materialien zum Speichern von Kohlenwasserstoffen werden auch Kohlenwasserstofffallen (hydrocarbon trap; HCT) genannt. Die bevorzugt eingesetzten HCTs nehmen aus dem Abgas die emittierten Kohlenwasserstoffe bei niedrigen Temperaturen von weniger als 300°C, vorzugsweise weniger als 350°C auf (es wird bei dieser Temperatur netto mehr gespeichert als abgegeben). Die HCT kann mit einem Oxidationskatalysator vergesellschaftet sein. Die Kohlenwasserstoffspeicherfähigkeit wird bevorzugt im Frischzustand bestimmt. Die Speicherfähigkeit der eingesetzten Materialien für Kohlenwasserstoffe kann nach Maßgabe der in der genannten Literatur beschriebenen Vorgehensweise bestimmt werden. Die im Rahmen dieser Erfindung angesprochene Kohlenwasserstoffspeicherfähigkeit bzw. -kapazität wird als Quotient aus gespeicherter Masse an Kohlenwasserstoffen pro Liter Substratvolumen angegeben. Tests zur Bestimmung der Kohlenwasserstoffspeicherfähigkeit sind dem Fachmann hinlänglich bekannt und in der Literatur beschrieben, beispielsweise in Lupescu et al., "A New Catalyzed HC Trap Technology that Enhances the Conversion of Gasoline Fuel Cold-Start Emissions," SAE Int. J. Fuels Lubr 11(4): 411-425, 2018.

Durch das zusätzliche Material zur temporären Speicherung von Kohlenwasserstoffen sollte die Kohlenwasserstoffspeicherfähigkeit des Abgasreinigungssystems auf mindestens 0,02 g Kohlenwasserstoffe pro L Substratvolumen erhöht werden (gemessen im Frischzustand). Insgesamt sollte die Speicherkapazität der eingesetzten Kohlenwasserstoffspeicherkomponenten ausreichen, damit im System zwischen 0,02 und 7,0 g Kohlenwasserstoffe pro Liter Substratvolumen, bevorzugt zwischen 0,05 und 6,0 g Kohlenwasserstoffe pro Liter Substratvolumen und besonders bevorzugt zwischen 0,08 und 5,0 g Kohlenwasserstoffe pro Liter Substratvolumen gespeichert werden kann (immer bezogen auf den Frischzustand und das Substrat auf dem die Materialien sich befinden). Diese, die Kohlenwasserstoffe temporär speichernden Materialen sind in einer ausreichenden Menge im Abgassystem vorhanden. Als bevorzugte Menge hat sich ein Wert von 50 - 350 g/L, vorzugsweise 75 - 300 g/L und ganz bevorzugt 100 - 250 g/L Substratvolumen erwiesen. Als Substratvolumen wird das Volumen des Substrats herangezogen, auf dem sich das Speichermaterial befindet.

Für die temporäre Speicherung von Kohlenwasserstoffen können dem Fachmann geläufige Materialien herangezogen werden. Vorzugsweise sind dies Zeolithe, wie z.B. Mordenite (MOR), Y-Zeolithe (FAU), ZSM-5 (MFI), Ferrierite (FER), Chabazite (CHA), AEI, LEV und β-Zeolithe (BEA) sowie zeolithähnlichen Materialien, wie z.B. Aluminiumphosphate (AIPO) und Siliziumaluminiumphosphat (SAPO) oder Mischungen davon (EP0324082A1). Materialien, welche sich für die Anwendung zur Speicherung von $NH_3$ als besonders günstig erwiesen haben, sind in der US2006/0010857AA bzw. WO2004076829A1 benannt. Besonders bevorzugt werden ZSM-5 (MFI), Chabazite (CHA), Ferrierite (FER), SAPO-34 und β-Zeolithe (BEA) eingesetzt. Ganz besonders bevorzugt werden CHA , BEA und AIPO-34 bzw. SAPO-34 verwendet. Äußerst bevorzugt werden Materialien des BEA-Typs verwendet. Diese Materialien sind, um eine verbesserte Speicheraktivität zu gewährleisten, vorzugsweise mit einem oder mehreren Metallen aus der Gruppe bestehend aus Eisen, Kupfer, Cäsium, Cer, Lanthan, Nickel, Mangan, Silber und Palladium versehen. Ganz besonders vorteilhaft ist Eisen in diesem Zusammenhang zu nennen. Der Fachmann weiß dabei, wie er die Zeolithe oder das zeolithähnliche Material mit den Übergangsmetallen zu versehen hat (PCT/EP2012/061382 sowie dort zitierte Literatur), um eine gute Aktivität für die temporäre Speicherung von Kohlenwasserstoffen bereitstellen zu können.

Unter dem Begriff "Zeolith" versteht man poröse Materialien mit einer Gitterstruktur aus eckenverknüpften $AlO_4$ und $SiO_4$-Tetraedern gemäß der allgemeinen Formel (W.M. Meier, Pure & Appl. Chem., Vol. 58, No. 10, pp. 1323-1328, 1986):

$$M_{m/z} [m\ AlO_2 * n\ SiO_2] * q\ H_2O$$

Die Struktur eines Zeolithen umfasst somit ein aus Tetraedern aufgebautes Netzwerk, das Kanäle und Hohlräume umschließt. Man unterscheidet natürlich vorkommende und synthetisch hergestellte Zeolithe.

Unter dem Begriff "zeolithähnliche Verbindung" wird im Rahmen dieser Schrift eine Verbindung verstanden, die denselben Strukturtyp aufweist, wie eine natürlich vorkommende oder eine synthetisch hergestellte Zeolithverbindung, die sich von solchen jedoch dadurch unterscheidet, dass die entsprechende Käfigstruktur nicht ausschließlich aus Aluminium- und Siliziumgerüstatomen aufgebaut ist. In solchen Verbindungen werden die Aluminium- und/oder Siliziumgerüstatome anteilig durch andere drei-, vier- oder fünfwertige Gerüstatome wie beispielsweise B(III), Ga(III), Ge(IV), Ti(IV) oder P(V) ersetzt. In der Praxis am häufigsten zur Anwendung kommt der Ersatz von Aluminium- und/oder Siliziumgerüstatomen durch Phosphoratome, beispielsweise in den Siliziumaluminiumphosphaten oder in den Aluminiumphosphaten, die in Zeolithstrukturtypen kristallisieren. Prominente Beispiele sind das in Chabazitstruktur kristallisierende Siliziumaluminiumphosphat SAPO-34 und das in Chabazitstruktur kristallisierende Aluminiumphosphat AlPO-34.

Der besondere Vorteil des erfindungsgemäßen Einsatzes von übergangsmetallausgetauschten Zeolithen bzw. zeolithähnlichen Verbindungen ist die Möglichkeit, dass diese Substanzen wie oben schon gesagt bei niedrigeren Temperaturen, z.B. im sogenannten Kaltstartmodus die unverbrannten Kohlenwasserstoffe einspeichern und diese dann erst bei erhöhten Temperaturen wieder abgeben. Bei diesen Temperaturen sind Katalysatoren zum Oxidieren von Kohlenwasserstoffen dann soweit aufgeheizt, dass diese die desorbierten Kohlenwasserstoffe entsprechend zu Wasser und Kohlendioxid oxidieren können. Insbesondere beim Einsatz der Kohlenwasserstoffe temporär speichernden Materialien auf einem separaten Durchflusssubstrat ist es von Vorteil, wenn diese Materialien ebenfalls Katalysatoren zur Oxidation von Kohlenwasserstoffen zu $H_2O$ und $CO_2$ aufweisen. Es wird auf das weiter unten zu diesem Punkt Gesagte verwiesen.

Das, die Kohlenwasserstoffe temporär speichernde Material kann im Abgasreinigungssystem auf einem oder den schon vorhandenen Aggregaten verteilt werden. Hierbei kann das entsprechende Material im Verhältnis zu den ggf.

schon vorhandenen katalytisch aktiven Materialien vergesellschaftet mit diesen oder in Zonen oder Schichten getrennt zu diesen auf einem oder mehreren Substraten vorliegen. Als solches bietet es sich an, das die Kohlenwasserstoffe temporär speichernde Material überwiegend auf den TWC2 zu verorten. Sofern in bestimmten Betriebszuständen Kohlenwasserstoffe vermehrt nach dem TWC1 vorhanden sein sollten, so können diese auf dem abstromseitig positionierten TWC2 entsprechend eingespeichert bzw. umgewandelt werden. Da der TWC2 vom Motorauslass entsprechend weiter entfernt ist, ist die Temperaturbelastung hier moderater, was einer besseren Speicherung Vorschub leistet. Sofern der vorzugsweise im Unterboden befindliche TWC2 dann auf Betriebstemperatur aufgewärmt ist, werden die eingespeicherten Kohlenwasserstoffe desorbiert und über dem TWC2 zu $CO_2$ und Wasser umgesetzt. So wird auch eine thermische Schädigung des die Kohlenwasserstoffe temporär speichernden Materials maximal vermieden.

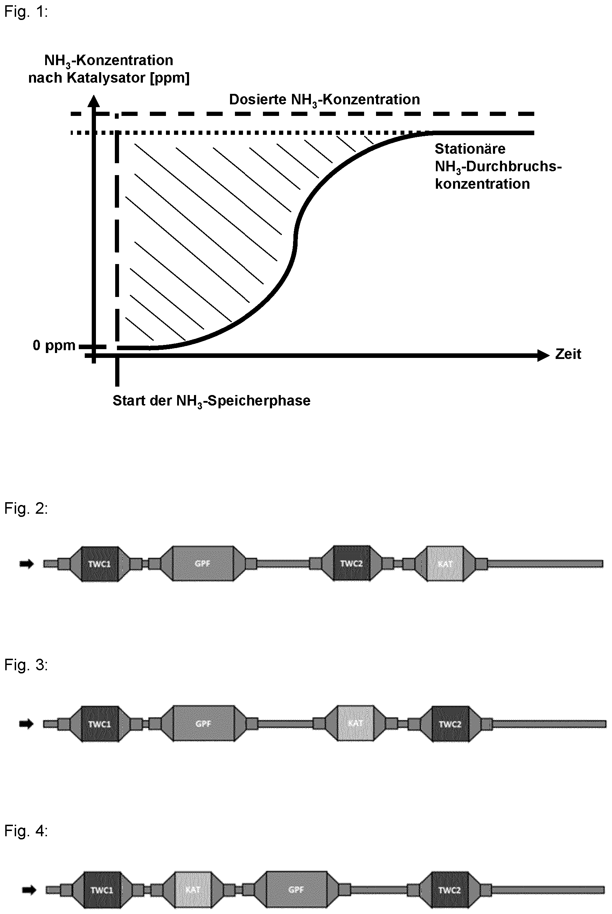

Alternativ aber bevorzugt kann das die Kohlenwasserstoffe temporär speichernde Material jedoch auch auf einem separaten Durchflusssubstrat angeordnet sein. Hierbei kann dieses Durchflusssubstrat (KAT) nach dem Fachmann bekannten Gesichtspunkten im Abgasreinigungssystem angeordnet werden (siehe Fig. 2 - 4). Bevorzugt ist eine Anordnung, bei der KAT abstromseitig zum TWC2 angeordnet ist. Die Vorteile sind die gleichen wie oben für die Verortung des entsprechenden Materials auf den TWC2 genannten. Damit ist der KAT - wie der TWC2 - vorzugsweise im Unterboden des Fahrzeugs angesiedelt. Erfindungsgemäß ist der KAT abstromseitig zum TWC1 und hinter dem GPF beheimatet. Insbesondere scheint es bei dieser letztgenannten Kombination von Vorteil zu sein, wenn der KAT in einer Entfernung von 30 - 250 cm, vorzugsweise 40 - 200 cm und ganz bevorzugt 50 - 180 cm abstromseitig zum Ausgang des TWC1 angeordnet ist. Ganz besondere bevorzugt wird der KAT im Unterboden des Fahrzeugs beheimatet.

Generell hat es sich als vorteilhaft erwiesen, wenn die einzelnen Substrate des erfindungsgemäßen Abgasreinigungssystems (TWC1, GPF, TWC2, KAT) hinsichtlich der Größe des Volumens, dass sie einnehmen, in einem bestimmten Verhältnis zueinander stehen. So ist von Vorteil, wenn der TWC1 einen Anteil des Volumens am Gesamtsystem einnimmt, welcher zwischen 20 und 50 Vol.-%, bevorzugt 30 - 40 Vol.-% liegt. Der GPF sollte einen Volumenanteil von 20 - 60 Vol.-%, bevorzugt 25 - 55 Vol.-% bezogen auf das Gesamtsystem aufweisen. Gleichfalls sollte der Anteil von TWC2 am Gesamtsystem 10 - 40 Vol.-%, bevorzugt 15 - 35 Vol.-% betragen. Der KAT aufweisend das Material zum temporären Speichern von Stickoxiden besitzt einen Anteil von vorzugsweise 5 - 30 Vol.-%, mehr bevorzugt 10 - 30 Vol.-% an dem Gesamtvolumen der Substrate im Abgasreinigungssystem. Unter Gesamtsystem wird hier die Summe der Volumina der Substrate von TWC1, GPF, TWC2 und KAT verstanden.

Der KAT weist eine relativ hohe Washcoatbeladung in g/L auf, die von 100 - 500 g/L, bevorzugt 125 - 450 g/L und ganz bevorzugt 150 - 400 g/L reicht. Der Aufbau des KAT entspricht in einer Ausgestaltung dem eines Oxidationskatalysators. Letzterer besitzt eine Oxidationsfunktion, um Kohlenwasserstoffe im Abgas oxidieren zu können. Bei derartigen Katalysatoren hat es sich als vorteilhaft erwiesen, wenn diese in einem zonierten und/oder geschichteten Aufbau vorliegen. Z.B. kann der KAT eine obere auf dem Substrat aufgebrachte Schicht mit einer Oxidationsfunktion für die Oxidation von Kohlenwasserstoffen aufweisen und unter dieser Schicht zumindest teilweise eine weitere Schicht mit dem Kohlenwasserstoffe temporär speichernden Material besitzen. Alternativ kann der KAT eine untere Schicht mit einer Oxidationsfunktion aufweisen, über die in einer oberen Schicht das die Kohlenwasserstoffe temporär speichernde Material aufgebracht ist. In einer weiteren alternativen Ausführungsform können die temporäre Speicherfunktion und die Oxidationsfunktion auch ganz oder teilweise vergesellschaftet in derselben Schicht vorliegen und optional zusätzlich eine weitere Schicht mit einer Oxidationsfunktion besitzen. Eine weitere Möglichkeit besteht darin, die temporäre Kohlenwasserstoffspeicherfunktion und die Oxidationsfunktion auf verschiedene Substrate aufzubringen. Als Ausgestaltungen hinsichtlich des Designs und der Materialien für die HCT kommen insbesondere solche aus der US20190351397AA, US20190351398AA oder US20190351393AA in Frage.

Das die Kohlenwasserstoffe temporär speichernde Material kann dabei wie weiter oben beschrieben ausgebildet sein. Als besonders bevorzugt haben sich hier mit Kupfer oder Eisen und/oder Palladium übergangsmetallausgetauschte Zeolithe des CHA, BEA bzw. AEI erwiesen. Mit Eisen oder Eisen und Palladium ausgetauschtes BEA ist besonders bevorzugt. Die Oxidationsfunktion wird im Wesentlichen durch die Metalle Rh, Pt und/oder Pd, bevorzugt Pt und/oder Pd oder Rh oder Rh und Pd bereitgestellt, die in einer Ausführungsform auf hochoberflächigem aktiven Aluminium geträgert sind. Aktives Aluminium enthält bis zu 10 Gew.-% bezogen auf das Aluminiumoxid an Lanthan und/oder $SiO_2$ als Beimengung. In einer alternativen aber bevorzugten Ausführungsform wird die Oxidationsfunktion durch Rh und/oder Pd und/oder Pt bereitgestellt, die auf ein Gemisch aus hochoberflächigem Aluminiumoxid und gängigen Sauerstoffspeichermaterialien wie Ceroxide, Cer-Zirkonmischoxide oder mit La, Y, Pr, Nd dotierte Cer bzw. Cer-Zirkonmischoxide geträgert sind. Durch das Design des KAT, die Applikation und Auswahl der Edelmetalle lässt sich die oxidative Wirkung der oxidativen Beschichtung gut austarieren, um eine ausreichende oxidative Wirkung auf die Kohlenwasserstoffe ausüben zu können.

Es kann ebenfalls von Vorteil sein, wenn den Kohlenwasserstoffe temporär speichernden Materialien auf dem KAT auch solche zugefügt werden, die befähigt sind, Sauerstoff zu speichern. Letzteres sind die in den TWCs in der Regel eingesetzten Sauerstoffspeichermaterialien. Diese bewirken die Bereitstellung einer sauerstoffreicheren Umgebung, die für die Oxidation von Kohlenwasserstoffen vorteilhaft ist. Entsprechende Materialien sind u.a. in der EP2007682A1, EP1921044A2, US6468941B1, US6585944B1 und US20050282698A1 beschrieben. Vorzugsweise kommen diesbezüglich Ceroxide, Cer-Zirkonmischoxide oder mit La, Y, Pr, Nd dotierte Cer bzw. Cer-Zirkonmischoxide in Betracht. Die Menge an Sauerstoff speicherndem Material kann vom Fachmann bemessen werden, sollte aber nicht unter 0,1 g/g, vorzugsweise 0,20 g/g bezogen auf das Gewicht des die Kohlenwasserstoffe temporär speichernden Materials eingesetzt werden.

TWC1 und TWC2 sind moderne Drei-Wege-Katalysatoren. Der Fachmann weiß, welche er für den vorliegenden Zweck einsetzen würde (siehe z.B. WO2019121994A1, WO2019121995A1, WO9535152A1, WO2008000449A2, EP0885650A2, EP1046423A2, EP1726359A1, EP1541220A1, EP1900416B1, EP3045226A1, WO2009012348A1 und EP1974809B1). Drei-Wege-Katalysatoren bestehen im Wesentlichen aus den Komponenten Edelmetall, hochoberflächiges Trägeroxid und Sauerstoffspeichermaterial. Die Sauerstoffspeichermaterialien sind insbesondere solche, in denen Cer/Zirkonium/Seltenerdmetall-Mischoxiden vorkommen. Als Seltenerdmetalloxid kommen beispielsweise Lanthanoxid, Yttriumoxid, Praseodymoxid, Neodymoxid, Samariumoxid und Mischungen von einem oder mehreren dieser Metalloxide in Betracht. Bevorzugt sind Lanthanoxid, Yttriumoxid, Neodymoxid und Mischungen von einem oder mehreren dieser Metalloxide. Besonders bevorzugt sind Lanthanoxid, Yttriumoxid und ganz besonders bevorzugt ist eine Mischung von Lanthanoxid und Yttriumoxid in diesem Zusammenhang.

Als Trägeroxid für katalytisch aktive Metalle kommen für den Fachmann hochoberflächige, temperaturstabile Oxide in Betracht. In der Regel sind dies Aluminiumoxide, Siliziumoxide, Zirkonoxide oder Titanoxide oder Mischungen derselben. Insbesondere aktives Aluminiumoxid ist dem Fachmann in diesem Zusammenhang bekannt. Es bezeichnet insbesondere $\gamma$-Aluminiumoxid mit einer Oberfläche von 100 bis 200 m²/g. Aktives Aluminiumoxid ist in der Literatur vielfach beschrieben und am Markt erhältlich. Es enthält in der Regel Siliziumoxid oder Lanthanoxid als Stabilisator in einer Menge von bis zu 10 Gew.-% bezogen auf das Aluminiumoxid.

Drei-Wege-Katalysatoren enthalten als katalytisch aktive Komponenten zumeist Metalle der Platingruppe, wie Pt, Pd und Rh, wobei Pd und Rh besonders bevorzugt sind. Die katalytisch aktiven Metalle sind häufig hochdispers auf den hochoberflächigen Oxiden und den Sauerstoffspeichermaterialien abgeschieden. Besonders bevorzugt ist es, wenn die Edelmetalle auf dem Sauerstoffspeichermaterial vorfixiert werden, bevor dieses mit den übrigen Bestandteilen in die Beschichtungsmischung vermengt wird. Bei den TWCs sind gezonte oder gelayerte Ausführungsform mittlerweile der Normalfall. In einer bevorzugten Ausführungsform besitzt zumindest der TWC1 einen 2-Schichtaufbau mit zwei unterschiedlichen Drei-Wege-Beschichtungen, vorzugsweise wie in EP3247493A1 beschrieben.

Die Drei-Wege-Katalysatoren werden durch einen dem Fachmann geläufigen Beschichtungsschritt vorzugsweise auf ein Durchflusssubstrat aufgebracht. Durchflusssubstrate sind im Stand der Technik übliche Katalysatorträger, die aus Metall (corrugated carrier, z.B. WO17153239A1, WO16057285A1, WO15121910A1 und darin zitierte Literatur) oder keramischen Materialien bestehen können. Bevorzugt werden feuerfeste Keramiken wie zum Beispiel Cordierit, Siliziumcarbit oder Aluminiumtitanat etc. eingesetzt. Die Anzahl der Kanäle pro Fläche wird durch die Zelldichte charakterisiert, welche üblicher Weise zwischen 300 und 900 Zellen pro Quadrat inch (cells per square inch, cpsi) liegt. Die Wanddicke der Kanalwände beträgt bei Keramiken zwischen 0,5 - 0,05 mm.

Der TWC1 ist erfindungsgemäß vorzugsweise motornah verbaut. Dies bedeutet, dass zwischen dem Turbolader und der einlassseitigen Stirnfläche des TWC1 lediglich 1 - 40 cm Entfernung liegen. Bevorzugt ist der Katalysator TWC1 2 - 30 cm und ganz bevorzugt 3 - 20 cm vom Turbolader entfernt verbaut. Der GPF kann in einigem Abstand vom TWC1, z.B. im Unterboden des Fahrzeugs verbaut werden. Bevorzugt ist jedoch die Ausführungsform, in der GPF recht nahe am auslassseitigen Ende des TWC1 verbaut wird. Bevorzugt ist der Abstand zwischen auslassseitiger Stirnfläche des TWC1 und GPF 1 - 60 cm, mehr bevorzugt 2 - 50 cm und ganz bevorzugt 3 - 40 cm. Der TWC2 ist entweder direkt nach dem Filter in einer motornahen Position verbaut, oder kommt vorzugsweise im Unterboden des Fahrzeugs im Abgassystem zum Einsatz. Dadurch ist die Temperaturbelastung dieses TWCs eine andere als die des TWC1. Aus diesem Grund unterscheiden sind die beiden TWCs in einigen Charakteristika voneinander. Bevorzugt weist der TWC2 eine geringene Washcoatbeladung als der TWC1 auf. Bevorzugt besteht der TWC1 aus mindestens 2-4 verschiedenen Drei-Wege-Katalysatorschichten oder Zonen, während der TWC2 bevorzugt aus mindestens 1-2 Drei-Wege-Katalysatorschichten oder Zonen besteht. In einer weiteren Ausführungsform hat es sich als vorteilhaft erwiesen, wenn die Washcoatbeladung in g/L des TWC1 größer ist als die des TWC2, insbesondere um einen Faktor zwischen 1,25 - 4, mehr bevorzugt 1,5 - 3. Zudem ist die Edelmetallkonzentration auf dem TWC1 bevorzugt größer als auf dem TWC2, insbesondere um einen Faktor 1,25 - 20, mehr bevorzugt 1,5 - 10. Die TWCs weisen eine übliche Washcoatbeladung auf. Diese liegt vorzugsweise bei 100 - 400 g/L, mehr bevorzugt 125 - 375 g/L und ganz bevorzugt 150 - 325 g/L.

Der GPF hat die Form eines Wandflussfilters. Als Wandflussfilter können alle im Stand der Technik üblichen keramischen Materialien eingesetzt werden. Bevorzugt werden poröse Wandflussfiltersubstrate aus Cordierit, Siliziumcarbid oder Aluminiumtitanat eingesetzt. Diese Wandflussfiltersubstrate weisen An- und Abströmkanäle auf, wobei jeweils die abströmseitigen Enden der Anströmkanäle und die anströmseitigen Enden der Abströmkanäle gegeneinander versetzt mit gasdichten "Stopfen" verschlossen sind. Hierdurch wird das zu reinigende Abgas, das das Filtersubstrat durchströmt, zum Durchtritt durch die poröse Wand zwischen An- und Abströmkanal gezwungen, was eine exzellente Partikelfilterwirkung bedingt. Durch die Porosität, Poren-/Radienverteilung, und Dicke der Wand kann die Filtrationseigenschaft für Partikel ausgelegt werden. Die Porosität der Wandflussfilter beträgt in der Regel mehr als 40%, generell von 40% bis 75%, besonders von 45% to 70% [gemessen nach DIN 66133 - neueste Fassung am Anmeldetag]. Die durchschnittliche Porengröße (Durchmesser) beträgt wenigstens 3 $\mu$m, z.B. von 3 $\mu$m bis 34 $\mu$m, bevorzugt mehr als 5 $\mu$m, insbesondere von 5 $\mu$m bis 28 $\mu$m oder von 7 $\mu$m bis 22 $\mu$m [gemessen nach DIN 66134 neueste Fassung am Anmeldetag].

Der GPF kann unbeschichtet, mit einer trockenen Pulverbeschichtung oder mit einer ggf. zusätzlichen, naßtechnisch hergestellten Beschichtung versehen im erfindungsgemäßen System zum Einsatz kommen (EP3595796A1, WO2020200394A1, WO2020200397A1). Entsprechende naßtechnisch hergestellte Filter mit verbesserter Filterwirkung werden in der WO2019121375A1 bzw. WO2020200398A1 bzw. PCT/EP2019/057995 vorgestellt. Alternativ oder kumulativ kommt ebenfalls die Beschichtung mit einem trockenen Pulver in Betracht (siehe hierzu z.B. DE102018108346A1, US8277880B2). In erste Linie wird durch derartige Beschichtungen die Filtrationseffizienz des Filters verbessert, ohne den Abgasgegendruck des Filters über die Maßen zu verschlechtern. Der GPF kann jedoch auch eine katalytische Beschichtung beherbergen. Ein Katalysatormaterial kann in Form einer Beschichtungssuspension auf und/oder in die porösen Wände der An- und/oder Abströmkanäle aufgetragen werden. In der Regel wird es sich dabei vorliegend um eine Beschichtung mit einem Drei-Wege-Katalysator handeln. Die Zusammensetzung entspricht den oben erfolgten Ausführungen. Somit können alle Aggregate im erfindungsgemäßen Abgasreinigungssystem katalytisch aktive Edelmetalle der oben angegebenen Provenienz aufweisen. In einer vorteilhafte Ausführungsform hat der GPF dabei eine höhere Edelmetallkonzentration in g/L Substratvolumen wie der TWC2. Sofern vorhanden ist es vorteilhaft, wenn der KAT eine höhere Edelmetallkonzentration in g/L Substratvolumen als der TWC2 besitzt. Beide genannten Ausführungsformen können je nach Anwendungsfall jedoch auch reziprok gesehen vorkommen. In einem besonderen Fall kann der TWC2 so ausgebildet sein, dass er lediglich Rhodium als Edelmetall aufweist.

Sofern der GPF mit einer Beschichtung versehen ist, so liegt die Washcoatbeladung bei 10 - 200 g/L, vorzugsweise 20 - 175 g/L und ganz bevorzugt 25 - 150 g/L. Dabei ist es von Vorteil, wenn das Substrat mit den Materialien zum temporären Speichern von Ammoniak (KAT) eine größere Washcoatbeladung in g/L aufweist als der GPF.

"Electrically heated catalyst" (EHC) sind spezielle Katalysatorkörper, die durch das Anlegen einer Stromquelle erwärmt werden können. Der Vorteil derartiger Systeme liegt darin, dass Betriebszustände des Abgasreinigungssystems vermieden werden, in denen die Katalysatoren aufgrund niedriger Temperaturen nicht oder nicht mehr ausreichend aktiv sind. Solche Betriebszustände existieren im Wesentlichen, wenn das Fahrzeug erst kürzlich gestartet wurde. Durch schnelles elektrisches Aufheizen der Katalysatorsubstrate, können die darauf befindlichen Katalysatoren auf Umsetzungstemperatur gebracht werden und so der Ausstoß unumgesetzter Schadstoffe verringert werden. Vorliegend ist es besonders vorteilhaft, wenn zumindest eines der im System vorhandenen Katalysatorsubstrate (TWC1, GPF, TWC2 oder KAT) ein elektrisch beheizbares Substrat ist. Ganz bevorzugt ist, wenn dies der TWC1 ist. Dieser ist aufgrund seiner Positionierung im System als erstes auf Arbeitstemperatur. Daher ist der Einsatz von Strom hier am geringsten, was gerade im Hinblick auf hybride Anwendung äußerst bevorzugt ist, da die Batterie geschont werden kann. Entsprechende EHC-Systeme in Hybridvehikeln sind dem Fachmann bekannt (US8776500BB).

Um die Schadstoffe, welche vom Fahrzeug emittiert werde, weiter zu reduzieren, kann sich im erfindungsgemäßen Abgasreinigungssystem, vorzugsweise in Strömungsrichtung des Abgases gesehen vor, nach oder im TWC2 ein sogenannter Ammoniakspeicherkatalysator befinden. Dieser kann im System ggf. gebildeten Ammoniak vermindern helfen, bevor er an die Umwelt abgegeben wird. Der Ammoniak wird temporär gespeichert und kann entweder mit vorhandenem Sauerstoff oder vorhandenem Stickoxid oxidiert werden. Hierbei entstehen Stickstoff und Wasser. Für die temporäre Speicherung von Ammoniak können dem Fachmann geläufige Materialien herangezogen werden. Vorzugsweise sind dies Zeolithe, wie z.B. Mordenite (MOR), Y-Zeolithe (FAU), ZSM-5 (MFI), Ferrierite (FER), Chabazite (CHA), AEI, LEV und $\beta$-Zeolithe (BEA) sowie zeolithähnlichen Materialien, wie z.B. Aluminiumphosphate (AIPO) und Siliziumaluminiumphosphat (SAPO) oder Mischungen davon (EP0324082A1). Materialien, welche sich für die Anwendung zur Speicherung von $NH_3$ als besonders günstig erwiesen haben, sind in der US2006/0010857AA bzw. WO2004076829A1 benannt. Besonders bevorzugt werden ZSM-5 (MFI), Chabazite (CHA), Ferrierite (FER), SAPO-34 und $\beta$-Zeolithe (BEA) eingesetzt. Ganz besonders bevorzugt werden CHA , BEA und AIPO-34 bzw. SAPO-34 verwendet. Äußerst bevorzugt werden Materialien des CHA-Typs und hier höchst bevorzugt SSZ-13 verwendet. Diese Materialien sind, um eine verbesserte Speicheraktivität zu gewährleisten, vorzugsweise mit Übergangsmetallen aus der Gruppe bestehend aus Eisen, Kupfer, Mangan und Silber versehen. Ganz besonders vorteilhaft ist Kupfer in diesem Zusammenhang zu nennen. Der Fachmann weiß dabei, wie er die Zeolithe oder das zeolithähnliche Material mit den Übergangsmetallen zu versehen hat (PCT/EP2012/061382 sowie dort zitierte Literatur), um eine gute Aktivität gegenüber der Reduktion von Stickoxiden mit Ammoniak bereitstellen zu können.

Die Speicherfähigkeit des Substrats für Ammoniak kann nach Maßgabe der folgenden Vorgehensweise bestimmt werden. Die im Rahmen dieser Erfindung angesprochene Ammoniakspeicherfähigkeit bzw. -kapazität wird als Quotient aus gespeicherter Masse Ammoniak pro Liter Katalysatorvolumen angegeben. Sie wird experimentell in einem Strömungsrohrreaktor bestimmt. Zur Vermeidung von unerwünschter Ammoniakoxidation am Reaktormaterial wird ein Reaktor aus Quarzglas verwendet. Aus dem Bereich des Katalysators, dessen Ammoniakspeicherkapazität bestimmt werden soll, wird ein Bohrkern als Prüfling entnommen. Bevorzugt wird ein Bohrkern mit 1 Zoll Durchmesser und 3 Zoll Länge als Prüfling entnommen. Der Bohrkern wird in den Strömungsrohrreaktor eingesetzt und bei einer Temperatur von 600 °C in einer Gasatmosphäre aus 500 ppm Stickstoffmonoxid, 5 Vol.-% Sauerstoff, 5 Vol.-% Wasser und Rest Stickstoff mit einer Raumgeschwindigkeit von 30000 h$^{-1}$ für 10 Minuten konditioniert. Anschließend wird in einem Gasgemisch aus 0 Vol.-% Sauerstoff, 5 Vol.-% Wasser und Rest Stickstoff mit einer Raumgeschwindigkeit von 30000 h$^{-1}$ die Messtemperatur von 200 °C angefahren. Nach Stabilisierung der Temperatur wird die NH$_3$-Speicherphase durch Aufschalten eines Gasgemisch aus 450 ppm Ammoniak, 0 Vol.-% Sauerstoff, 5 Vol.-% Wasser und Rest Stickstoff mit einer Raumgeschwindigkeit von 30000 h$^{-1}$ eingeleitet. Dieses Gasgemisch bleibt so lange aufgeschaltet, bis abströmseitig vom Prüfling eine stationäre Ammoniakdurchbruchskonzentration verzeichnet wird. Die bei Stationarität gemessene NH$_3$-Konzentration nach Katalysator kann auch unter der dosierten NH$_3$-Konzentration liegen. Die auf dem Prüfling eingespeicherte Masse an Ammoniak wird aus der aufgezeichneten Ammoniak-Durchbruchskurve durch Integration vom Start der NH$_3$-Speicher-phase bis zum Erreichen der Stationarität unter Einbeziehung der gemessenen stationären NH$_3$-Durchbruchskonzentration sowie dem bekannten Volumenfluss berechnet (schraffierte Fläche in der Fig. 1). Die Ammoniakspeicherkapazität wird berechnet als Quotient aus der eingespeicherten Masse an Ammoniak, geteilt durch das Volumen des getesteten Bohrkerns. Durch das zusätzliche Material zur Speicherung von Ammoniak sollte die Ammoniakspeicherfähigkeit des Abgasreinigungssystems auf mindestens 0,25 g Ammoniak pro L Substratvolumen erhöht werden. Insgesamt sollte die Speicherkapazität der eingesetzten Ammoniakspeicherkomponenten ausreichen, damit im System 0,25 und 3,5 g NH$_3$ pro Liter Substratvolumen, bevorzugt zwischen 0,5 und 2,2 g NH$_3$ pro Liter Substratvolumen und besonders bevorzugt zwischen 0,5 und 2,0 g NH$_3$/Liter Substratvolumen Ammoniak gespeichert werden kann.

Das Material zur temporären Speicherung von Ammoniak kann zugleich im Stande sein, im Abgas vorhandene Stickoxide und den eingespeicherten Ammoniak zu Stickostoff zu komproportionieren. In diesem Fall wirkt der Ammoniakspeicher wie ein Katalysator zur selektiven katalytischen Reduktion (SCR; WO2008106518A2). Des Weiteren kann es von Vorteil sein, wenn diesem SCR-Katalysator noch eine Funktion zur Oxidation von Ammoniak zu Stickstoff beigefügt wird(WO2008106519A1). Vorteilhaft ist daher, dass die Materialien zum temporären Speichern von Ammoniak ebenfalls Katalysatoren zur Oxidation von NH$_3$ zu N$_2$ aufweisen. Als solches handelt es sich dann vorliegend um einen Ammoniakoxidationskatalysator (AMOX) bzw. einen Ammoniaksperrkatalysator (US5120695; EP1892395A1; EP1882832A2; EP1876331A2; WO12135871A1; US2011271664AA; WO11110919 A1). Sofern zur Oxidation des eingespeicherten Ammoniaks nicht genügend Stickoxide im System vorhanden sein sollten, kann der Ammoniak über dem AMOX auch mit vorhandenem Sauerstoff zu Stickstoff umgesetzt werden. In beiden Fällen - als SCR-Katalysator oder AMOX - erfolgt keine Abgabe von Ammoniak an die Umwelt.

Ebenfalls von Vorteil ist es, wenn im erfindungsgemäßen Abgasreinigungssystem eine Funktionalität zur temporären Speicherung von Stickoxide vorhanden ist. Hierdurch lässt sich verhindern, dass während sogenannter Kaltlaufphasen des Fahrzeugs übermäßig viele unumgesetzte Stickoxide emittiert werden. Diese werden dann eingespeichert und späterhin, wenn ausreichend Temperatur und Reduktionsmittel im Abgassystem vorhanden ist, entweder durch eine reduktive Regeneration (sogenannte NOx-Speicherkatalysatoren; NSC) oder durch thermale Desorption (passive NOx Speicher; PNA) und Reduktion über einem Drei-Wege-Katalysator vermindert. Bzgl. der Wirkungsweise und den vorzugsweise einzusetzenden Materialien wird auf die einschlägige Literatur verwiesen (WO2020058265A1; EP3695902A1; US2019120109AA; US2018318763AA; US2015266002AA; WO2019134958A1).

Ebenfalls Gegenstand der vorliegenden Erfindung bildet ein Verfahren zur Reinigung von Abgasen eines überwiegend stöchiometrisch betriebenen Verbrennungsmotors, bei dem das Abgas über ein Abgasreinigungssystem nach einem der vorhergehenden Ansprüche geleitet wird. Die für das System benannten bevorzugten und alternativen Ausführungsformen gelten mutatis mutandis auch für das Verfahren.

Mit dem Abgassystem und dem vorgestellten Verfahren gemäß vorliegender Erfindung ist es möglich, die Abgasgrenzwerte zukünftiger noch strengerer Abgasnormen einhalten zu können. Neben den Standardwerten wie HC, CO, NOx und Ruß erlaubt das erfindungsgemäße System zumindest in seinen vorteilhaften Ausgestaltungen auch die Reduzierung sogenannter sekundärer Schadstoffe, wie z.B. NH$_3$, N$_2$O und andere. Im Speziellen die motornahe Anordnung des TWC1 ermöglicht sehr hohe Umsatzraten für die emissionsrelevanten Schadstoffe CO, HC und NOx. Der zusätzliche TWC2 kann ggf. unterstützend wirken und vor allen in Betriebspunkten mit hoher Last und Abgasmassenströmen helfen, die hohen Konversionsraten von CO, HC und NOx sicherzustellen. Die Verwendung des Partikelfilters hingegen, führt zu signifikanten Abscheideraten von Ruß, sodass die gegebenen Emissionsgrenzwerte sicher eingehalten werden können. Dem Fachmann ist hinlänglich bekannt, dass klassische Dreiwegekatalysatoren in den entsprechenden Temperaturregimen und Motorbetriebspunkten gewisse Mengen an Kohlenwasserstoffen nicht vollständig oxidieren können. Schließlich wird durch Verwendung von KAT sichergestellt, dass vor allem im Kaltstart gebildete Kohlenwasserstoffe zusätzlich signifikant reduziert werden können. Damit ist ein solches System prädestiniert dafür in Automobilen eingesetzt zu werden, die zukünftige strenge Abgasgrenzwerte für eine Zulassung einhalten müssen.

Fig. 1: Hier wird die typische Konzentrationskurve einer Ammoniakabsorptionsmessung gezeigt.

Fig. 2: Zeigt eine Ausführungsform eines erfindungsgemäßen Systems mit KAT abstromseitig zum TWC2.

Fig. 3: Zeigt eine Ausführungsform eines erfindungsgemäßen Systems mit KAT zwischen GPF und TWC2.

Fig. 4: Zeigt eine Ausführungsform eines erfindungsgemäßen Systems mit KAT aufstromseitig zum GPF.

Fig. 5: Gemittelte Beutelemissionen für THC/NMHC/CO/NOx der beiden Abgasnachbehandlungssysteme TWC-GPF-TWC und TWC-GPF-TWC+KAT im Vergleich.

Fig. 6: Gemittelten kumulierten Modalverläufe von HC, CO und NOx während der ersten 200s des Fahrzyklus.

Beispiele: Experimentelle Daten

Ein Euro 6 Benzinfahrzeug mit 1,5L DI Motor wurde mit einem künstlich auf End-of-life gealterten Abgassystem bestehend aus einem ersten motornahen TWC mit 1,26L Katalysatorvolumen (Substratdimensionen 118,4mmx114,3mm) und einer konventionellen Dreiwege-Beschichtung mit 1,77 g/L Edelmetall (0/92/8 Pt/Pd/Rh), einem abströmseitig angeordneten, unbeschichteten GPF mit 1,39L Katalysatorvolumen (Substratdimensionen 132,1mmx101,6mm) und einem im Unterboden angeordneten, zweiten TWC mit 1,26L Katalysatorvolumen (Substratdimensionen 118,4mmx114,3mm) und einer konventionellen Dreiwege-Beschichtung mit 0,83 g/L Edelmetall (0/80/20 Pt/Pd/Rh) und auf einem Rollenprüfstand in einem RTS aggressive Fahrzyklus gefahren. Dieses System wird als TWC-GPF-TWC Referenzsystem bezeichnet und hat ein Gesamtsubstratvolumen von 3,9L. Dabei wurden die Emissionen THC, NMHC, CO, NOx, NH3 und N2O gemessen, die dafür zu verwendende Messtechnik ist dem Fachmann bekannt. Dargestellt ist jeweils der Mittelwert aus mehreren Messungen.

Dem gegenüber gestellt wurde ein System nach den hier genannten Patentansprüchen. Dazu wurde dasselbe Euro 6 Benzinfahrzeug mit 1,5L DI Motor mit einem künstlich auf End-of-life gealterten Abgassystem bestehend aus einem ersten motornahen TWC mit 1,26L Katalysatorvolumen (Substratdimensionen 118,4mmx57,2mm) und einer konventionellen Dreiwege-Beschichtung mit 1,77 g/L Edelmetall (0/92/8 Pt/Pd/Rh), einem abströmseitig angeordneten, unbeschichteten GPF mit 1,39L Katalysatorvolumen (Substratdimensionen 132,1mmx101,6mm), einem im Unterboden angeordneten zweiten TWC mit 0,63L Katalysatorvolumen (Substratdimensionen 118,4mmx57,2mm) und einer konventionellen Dreiwege-Beschichtung mit 0,83 g/L Edelmetall (0/80/20 Pt/Pd/Rh) und einem abströmseitig davon angeordneten KAT mit 0,63L Katalysatorvolumen (Substratdimensionen 118,4mmx57,2mm) und einer Beschichtung, die zusätzlich temporär Kohlenwasserstoffe speichern kann, mit 0,83 g/L Edelmetall (0/80/20 Pt/Pd/Rh) auf einem Rollenprüfstand in einem RTS aggressive Fahrzyklus gefahren. Dieses System wird als TWC-GPF-TWC+KAT bezeichnet und hat ein Gesamtsubstratvolumen von 3,9L. Dabei wurden die Emissionen THC, NMHC, CO, NOx, $NH_3$ und $N_2O$ gemessen, die dafür zu verwendende Messtechnik ist dem Fachmann bekannt. Dargestellt ist jeweils der Mittelwert aus mehreren Messungen.

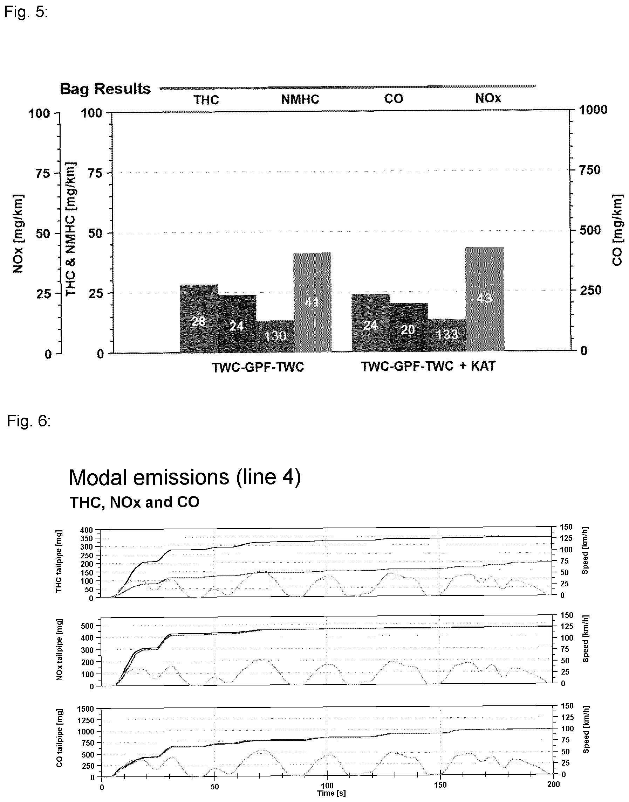

Figur 5 zeigt die Vorteile des TWC-GPF-TWC+KAT Systems gegenüber dem TWC_GPF_TWC Referenzsystem in einer Reduktion der THC und NMHC Emissionen um 15%, ohne die CO oder NOx-Emissionen negativ zu beeinflussen. Die Vorteile für die HC-Emissionen werden noch deutlicher in Figur 6, wo die gemittelten kumulierten Modalverläufe von HC, CO und NOx während der ersten 200s des Fahrzyklus dargestellt sind. Hier können die HC-Emissionen durch das TWC-GPF-TWC+KAT System in blau um mehr als ein Drittel gegenüber dem TWC-GPF-TWC Referenzsystem in schwarz reduziert werden, wobei es keinen negativen Einfluss auf die CO- oder NOx-Performance gibt. Dieser Effekt wird bei gleichem Gesamtsubstratvolumen der beiden verglichenen Systeme erreicht, das heißt bei halbiertem TWC2 des TWC-GPF-TWC+KAT Systems verglichen mit dem des TWC-GPF-TWC Referenzsystems. Bei gleichem Volumen des TWC2 in beiden Systemen ist daher mit einem noch verstärkten Vorteil für das TWC-GPF-TWC+KAT Systems zu rechnen.

**Patentansprüche**

1. Abgasreinigungssystem zur Reinigung von Abgasen eines überwiegend stöchiometrisch betriebenen Verbrennungsmotors aufweisend einen motornahen TWC1 auf einem Durchflusssubstrat, einen abstromseitig zum TWC1 angebrachten GPF als Wandflussfilter und abstromseitig zum GPF einen weiteren TWC2 auf einem Durchflusssubstrat,

   wobei
   das System zusätzlich Materialien zum temporären Speichern von Kohlenwasserstoffen aufweist,
   **dadurch gekennzeichnet, dass**

diese abstromseitig zum TWC1 und hinter dem GPF beheimatet sind.

2. System nach Anspruch 1,
   **dadurch gekennzeichnet, dass**
   durch dieses zusätzliche Material die Kohlenwasserstoffspeicherfähigkeit auf mindestens 0,020 g Kohlenwasserstoffe pro L Substratvolumen erhöht wird.

3. System nach Anspruch 1 und/oder 2,
   **dadurch gekennzeichnet, dass**
   die Materialien zum temporären Speichern von Kohlenwasserstoffen in einer Menge von 50 - 350 g/L Substratvolumen im System vorhanden sind.

4. System nach einem der vorhergehenden Ansprüche,
   **dadurch gekennzeichnet, dass**
   die Materialien zum temporären Speichern von Kohlenwasserstoffen Materialien ausgewählt aus der Gruppe bestehend aus Zeolithen oder zeolithähnlichen Materialien aufweisen.

5. System nach einem der vorhergehenden Ansprüche,
   **dadurch gekennzeichnet, dass**
   die Materialien zum temporären Speichern von Kohlenwasserstoffen ebenfalls Katalysatoren zur Oxidation von Kohlenwasserstoffen zu $H_2O$ und $CO_2$ aufweisen.

6. System nach einem der vorhergehenden Ansprüche,
   **dadurch gekennzeichnet, dass**
   die Materialien zum temporären Speichern von Kohlenwasserstoffen auf einem separaten Durchflusssubstrat angeordnet sind.

7. System nach Anspruch 6,
   **dadurch gekennzeichnet, dass**
   das Substrat mit den Materialien zum temporären Speichern von Kohlenwasserstoffen einen Anteil von 5 - 30 Vol.-% an dem Gesamtvolumen der Substrate im Abgasreinigungssystem ausmacht.

8. System nach einem der Ansprüche 6 bis 7,
   **dadurch gekennzeichnet, dass**
   das Substrat mit den Materialien zum temporären Speichern von Kohlenwasserstoffen eine größere Washcoatbeladung in g/L aufweist als der GPF.

9. System nach einem der vorhergehenden Ansprüche,
   **dadurch gekennzeichnet, dass**
   mindestens ein Substrat elektrisch beheizbar ist.

10. Verfahren zur Reinigung von Abgasen eines überwiegend stöchiometrisch betriebenen Verbrennungsmotors, bei dem das Abgas über ein Abgasreinigungssystem nach einem der vorhergehenden Ansprüche geleitet wird.

**Claims**

1. Exhaust gas purification system for purifying exhaust gases of a predominantly stoichiometrically operated internal combustion engine having a TWC1 near the engine on a through-flow substrate, a GPF attached downstream of the TWC1 as a wall-flow filter, and another TWC2 on a through-flow substrate downstream of the GPF,

   the system additionally comprising materials for temporarily storing hydrocarbons,
   **characterized in that**
   these are located downstream of the TWC1 and behind the GPF.

2. System according to claim 1,
   **characterized in that**
   by means of this additional material, the hydrocarbon storage capacity is increased to at least 0.020 g of hydrocarbons per L substrate volume.

3. System according to claim 1 and/or 2,
   **characterized in that**
   the materials for temporarily storing hydrocarbons are present in the system in an amount of 50-350 g/L of substrate volume.

4. System according to any of the preceding claims,
   **characterized in that**
   the materials for temporarily storing hydrocarbons comprise materials selected from the group consisting of zeolites or zeolite-like materials.

5. System according to any of the preceding claims,
   **characterized in that**
   the materials for temporarily storing hydrocarbons likewise comprise catalysts for oxidizing hydrocarbons to $H_2O$ and $CO_2$.

6. System according to any of the preceding claims,
   **characterized in that**
   the materials for temporarily storing hydrocarbons are arranged on a separate through-flow substrate.

7. System according to claim 6,
   **characterized in that**
   the substrate having the materials for temporarily storing hydrocarbons makes up a proportion of 5-30 vol.% of the total volume of the substrates in the exhaust gas purification system.

8. System according to any of claims 6 to 7,
   **characterized in that**
   the substrate having the materials for temporarily storing hydrocarbons has a greater washcoat loading in g/L than the GPF.

9. System according to any of the preceding claims,
   **characterized in that**
   at least one substrate can be electrically heated.

10. Method for purifying exhaust gases of a predominantly stoichiometrically operated internal combustion engine, in which the exhaust gas is passed through an exhaust gas purification system according to any of the preceding claims.

**Revendications**

1. Système d'épuration de gaz d'échappement permettant l'épuration de gaz d'échappement d'un moteur à combustion interne fonctionnant principalement de manière stœchiométrique, présentant un TWC1 proche du moteur sur un substrat d'écoulement, un GPF monté en aval du TWC1 comme filtre d'écoulement sur paroi et, en aval du GPF, un autre TWC2 sur un substrat d'écoulement,

   dans lequel le système présente en outre des matériaux permettant le stockage temporaire d'hydrocarbures,
   **caractérisé en ce que**
   ceux-ci sont situés en aval du TWC1 et derrière le GPF.

2. Système selon la revendication 1,
   **caractérisé en ce que**
   la capacité de stockage d'hydrocarbures est augmentée à au moins 0,020 g d'hydrocarbures par L de volume de substrat par ledit matériau supplémentaire.

3. Système selon la revendication 1 et/ou 2,
   **caractérisé en ce que**
   les matériaux permettant le stockage temporaire d'hydrocarbures sont présents dans le système à raison de 50 à 350 g/L de volume de substrat.

4. Système selon l'une des revendications précédentes,
   **caractérisé en ce que**
   les matériaux permettant le stockage temporaire d'hydrocarbures présentent des matériaux choisis dans le groupe constitué de zéolithes ou de matériaux similaires à la zéolithe.

5. Système selon l'une des revendications précédentes,
   **caractérisé en ce que**
   les matériaux permettant le stockage temporaire d'hydrocarbures présentent également des catalyseurs permettant l'oxydation des hydrocarbures en $H_2O$ et en $CO_2$.

6. Système selon l'une des revendications précédentes,
   **caractérisé en ce que**
   les matériaux permettant le stockage temporaire d'hydrocarbures sont disposés sur un substrat d'écoulement séparé.

7. Système selon la revendication 6,
   **caractérisé en ce que**
   le substrat comportant les matériaux permettant le stockage temporaire d'hydrocarbures représente une proportion allant de 5 à 30 % en volume du volume total des substrats dans le système d'épuration des gaz d'échappement.

8. Système selon l'une des revendications 6 à 7,
   **caractérisé en ce que**
   le substrat comportant les matériaux permettant le stockage temporaire d'hydrocarbures présente une charge de revêtement catalytique en g/L supérieure à celle du GPF.

9. Système selon l'une des revendications précédentes,
   **caractérisé en ce que**
   au moins un substrat peut être chauffé électriquement.

10. Procédé permettant l'épuration de gaz d'échappement d'un moteur à combustion interne fonctionnant principalement de manière stœchiométrique, dans lequel les gaz d'échappement sont acheminés par l'intermédiaire d'un système d'épuration de gaz d'échappement selon l'une des revendications précédentes.

Fig. 1:

Fig. 2:

Fig. 3:

Fig. 4:

Fig. 5:

Fig. 6:

## Modal emissions (line 4)
### THC, NOx and CO

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1657410 A2
- EP 2042226 A2
- EP 3639919 A1
- EP 3642460 B1
- DE 102019219115 A1
- US 2018230882 A1
- DE 102013211387 A1
- US 10323593 B2
- US 6729129 B2
- EP 0324082 A1
- US 20060010857 A
- WO 2004076829 A1
- EP 2012061382 W
- US 20190351397 A
- US 20190351398 A
- US 20190351393 A
- EP 2007682 A1
- EP 1921044 A2
- US 6468941 B1
- US 6585944 B1
- US 20050282698 A1
- WO 2019121994 A1
- WO 2019121995 A1
- WO 9535152 A1
- WO 2008000449 A2
- EP 0885650 A2
- EP 1046423 A2
- EP 1726359 A1
- EP 1541220 A1
- EP 1900416 B1
- EP 3045226 A1

- WO 2009012348 A1
- EP 1974809 B1
- EP 3247493 A1
- WO 17153239 A1
- WO 16057285 A1
- WO 15121910 A1
- EP 3595796 A1
- WO 2020200394 A1
- WO 2020200397 A1
- WO 2019121375 A1
- WO 2020200398 A1
- EP 2019057995 W
- DE 102018108346 A1
- US 8277880 B2
- US 8776500 BB
- WO 2008106518 A2
- WO 2008106519 A1
- US 5120695 A
- EP 1892395 A1
- EP 1882832 A2
- EP 1876331 A2
- WO 12135871 A1
- US 2011271664 A
- WO 11110919 A1
- WO 2020058265 A1
- EP 3695902 A1
- US 2019120109 A
- US 2018318763 AA
- US 2015266002 A
- WO 2019134958 A1

**In der Beschreibung aufgeführte Nicht-Patentliteratur**

- **LUPESCU et al.** A New Catalyzed HC Trap Technology that Enhances the Conversion of Gasoline Fuel Cold-Start Emissions. *SAE Int. J. Fuels Lubr*, 2018, vol. 11 (4), 411-425

- **W.M. MEIER**. *Pure & Appl. Chem.*, 1986, vol. 58 (10), 1323-1328